# EUROPEAN PATENT APPLICATION

(11) **EP 1 195 957 A1**
(43) Date of publication of application: **10.04.2002**
(21) Application number: 00440269.9
(22) Date of filing: 09.10.2000
(51) Int. Cl.: H04L 12/58, G06F 17/60

(54) **Method and device for forwarding electronic messages**

(71) Applicant: ALCATEL, 75008 Paris (FR)
(72) Inventor: Diebolt, Frank, 67200 Strasbourg (FR); Simon, Cédric, 67400 Illkirch (FR); Marchand, Jean-Philippe, 67640 Fegersheim (FR); Villars, Sébastien, 67400 Illkirch (FR)
(74) Representative: van Bommel, Jan Peter

(57) **Abstract**

By providing a message processing system defined by a first address with an address receiver for receiving a second address signal from a terminal at a third destination defined by a third address signal, which third address signal is different from said first address signal, the message processing system can be operated from another location. Preferably the forwarding is made dependent upon a message detection like urgency, confidentiality, acknowledgement, source address, message size, upon a code detection for security reasons, and upon an arbitration for taking into account the house rules.

## Description

The invention relates to a message processing system comprising a message receiver for receiving a message sent to a first destination defined by a first address signal and comprising a message forwarder for automatically forwarding said message to a second destination defined by a second address signal.

Such a message processing system is generally known, like for example an ordinary server-email configuration system, which allows a user at said first destination (for example a first location) defined by said first address signal (in / near said message processing system) to enter said second address signal defining said second destination (for example a second location). As a result, all email messages sent to said first destination are forwarded automatically to said second destination.

Such a message processing system is disadvantageous, inter alia, due to said user either being obliged to go to / be near said first destination, or being obliged in case of being absent to for example call a colleague or another member of the family, for activating said forwarding.

It is an object of the invention, inter alia, to provide a message processing system as described in the preamble, which offers more possibilities.

Thereto, the message processing system according to the invention is characterised in that the message processing system comprises an address receiver for receiving said second address signal originating from a terminal at a third destination defined by a third address signal, which third address signal is different from said first address signal.

By providing the message processing system with the address receiver, said user may now enter said second address signal via said terminal at said third destination (for example a third location), in response to which the message processing system is informed of the user's request to forward all messages sent to said first destination to said second destination. This second destination could coincide with the third destination, but may also be different from said third destination. The message processing system is then possibly provided with a converter for converting for example signalling signals into address signals.

Said terminal may be a wired terminal, a cordless terminal, a wireless terminal, a mobile terminal, a cellular terminal etc. and may be a telephone, a screenphone, a pc, a laptop, a palmtop, etc.

The invention is based on the insight, inter alia, that remote operation offers more possibilities.

The invention solves the problem, inter alia, of providing a message processing system which can be remotely operated.

A first embodiment of the message processing system according to the invention is characterised in that the message processing system comprises a message detector for a message detection of at least a part of said message, which message detector is coupled to said message forwarder for automatically forwarding said message in dependence of said message detection.

This message detector for example detects a message urgency (low priority - average priority - high priority), a message confidentiality (normal, private, company confidential), a message acknowledgement (none, arrived, read), a source address (the sender's address), a message size, etc., and in response said message for example is entirely forwarded or partly forwarded or not forwarded at all.

A second embodiment of the message processing system according to the invention is characterised in that the message processing system comprises a code detector for a code detection of a code signal originating from said terminal, which code detector is coupled to said message forwarder for automatically forwarding said message in dependence of said code detection.

This code detector detects said code signal for example being a pincode entered at said terminal by said user and/or a secret code generated automatically in said terminal etc. for security purposes, to avoid that a non-authorised person can remotely operate said message processing system for processing messages not destined for him. The code detector may further detect further code signals for example entered at said terminal by said user or generated automatically in said terminal and defining for example rules for the message detector (which message urgency, which message confidentiality, which message acknowledgement, which source address, which message size, etc).

A third embodiment of the message processing system according to the invention is characterised in that the message processing system comprises an arbiter coupled to said message forwarder for automatically forwarding said message in dependence of an arbitration.

This arbiter for example checks user-dependent rules like an identity of said user and his privileges, and/or for example checks user-independent rules like time, original source and original (first) destination and chosen (second) destination of each message to prevent for example that messages are forwarded at unallowed moments in time (for example during the weekend), from unallowed original sources and/or to unallowed destinations (like the competition).

A fourth embodiment of the message processing system according the invention is characterised in that the message processing system comprises a memory for storing messages.

This memory allows for example the storage of each message, with a copy of each message being forwarded, or vice versa.

A fifth embodiment of the message processing system according the invention is characterised in that said memory is coupled to said message forwarder for automatically forwarding said messages already stored.

The memory being coupled to said message forwarder allows at a certain moment in time the forwarding of messages to be received as well as the forwarding of messages already received in the past and already stored in said memory for a certain amount of time. Such an option is for example defined by yet further code signals entered by said user at said terminal and/or generated automatically in said terminal etc.

A sixth embodiment of the message processing system according the invention is characterised in that said message comprises an email signal, a voice/speech signal, an audio signal and/or a fax signal.

Of course, other messages are not to be excluded, like for example audio / video messages comprising audio / video signals.

A seventh embodiment of the message processing system according the invention is characterised in that said second address signal is sent from said terminal to said address receiver via an email signal, a voice/speech signal, an audio signal and/or a fax signal.

The message processing system is then possibly provided with a converter for converting email signals into address signals and/or for converting voice/speech signals into address signals and/or for converting audio signals (DTMF) into address signals and/or for converting fax signals into address signals.

The invention further relates to a terminal for use in combination with a message processing system comprising a message receiver for receiving a message sent to a first destination defined by a first address signal and comprising a message forwarder for automatically forwarding said message to a second destination defined by a second address signal.

The terminal according to the invention is characterised in that the terminal at a third destination defined by a third address signal comprises an address sender for sending said second address signal to an address receiver in said message processing system, which third address signal is different from said first address signal.

Embodiments of the terminal according to the invention are in correspondance with the embodiments of the message processing system according to the invention.

The invention also relates to a a method for use in a message processing system and comprising the steps of receiving a message sent to a first destination defined by a first address signal and of automatically forwarding said message to a second destination defined by a second address signal.

The method according to the invention is characterised in that the method comprises the step of receiving said second address signal originating from a terminal at a third destination defined by a third address signal, which third address signal is different from said first address signal.

Embodiments of the method according to the invention are in correspondance with the embodiments of the message processing system according to the invention.

The document US 5,968,117 discloses a device and system to facilitate accessing electronic mail from remote user-interface devices. This is a so-called pulling system, which is completely different from the so-called pushing system according to the invention. US 5,889,845 discloses a system and method for providing a remote user with a virtual presence to an office, and US 5,737,395 discloses a system and method for integrating voice, facsimile and electronic mail data through a personal computer. Neither one of these documents discloses the message processing system according to the invention. All references including further references cited with respect to and/or inside said references are considered to be incorporated in this patent application.

The invention will be further explained at the hand of an embodiment described with respect to a drawing, whereby

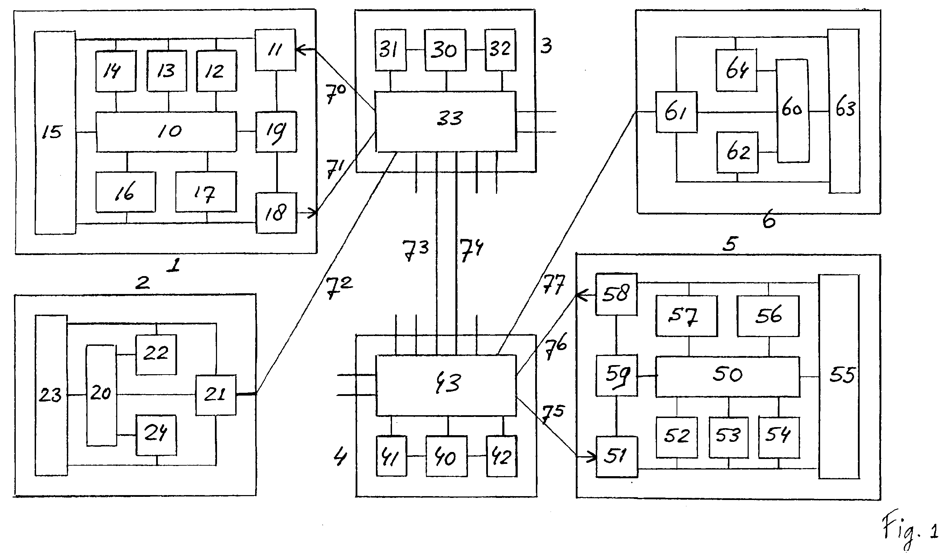

figure 1 discloses a first message processing system according to the invention and a first terminal according to the invention and discloses a second message processing system according to the invention and a second terminal according to the invention.

The first message processing system 1 according to the invention comprises a receiving interface 1 1 coupled via a bus to a message receiver 12 and to an address receiver 13 and to a code receiver 14 and to a memory 15. Receiving interface 11 is further coupled to an arbiter 19, which is further coupled to a sending interface 18, which is further coupled via a bus to said memory 15 and to a message detector 16 and to a message forwarder 17. Said message receiver 12, address receiver 13, code detector 14, arbiter 19, memory 15, message detector 16 and message forwarder 17 are each further coupled to a processor 10.

The first terminal 2 according to the invention comprises a transceiver 21 of which an output is coupled via a bus to a detector 22 and to an input of a man-machine-interface 23 or mmi 23 and of which an input is coupled via a bus to a generator 24 and to an output of mmi 23. Said mmi 23, detector 22, generator 24 and transceiver 21 are each further coupled to a processor 20.

The second message processing system 5 according to the invention comprises a receiving interface 51 coupled via a bus to a message receiver 52 and to an address receiver 53 and to a code receiver 54 and to a memory 55. Receiving interface 51 is further coupled to an arbiter 59, which is further coupled to a sending interface 58, which is further coupled via a bus to said memory 55 and to a message detector 56 and to a message forwarder 57. Said message receiver 52, address receiver 53, code detector 54, arbiter 59, memory 55, message detector 56 and message forwarder 57 are each further coupled to a processor 50.

The second terminal 6 according to the invention comprises a transceiver 61 of which an output is coupled via a bus to a detector 62 and to an input of a man-machine-interface 63 or mmi 63 and of which an input is coupled via a bus to a generator 64 and to an output of mmi 63. Said mmi 63, detector 62, generator 64 and transceiver 61 are each further coupled to a processor 60.

A first switch 3 comprises a processor 30 coupled to a detector 31 and to a generator 32 and to a coupler 33, which is further internally coupled to said detector 31 and to said generator 32, and which is further externally coupled via a connection 70 to receiving interface 11 and via a connection 71 to sending interface 18 and via a connection 72 to transceiver 21 and via connections 73 and 74 to a coupler 43 in a second switch 4, which further comprises a processor 40 coupled to a detector 41 and to a generator 42 and to said coupler 43, which is further internally coupled to said detector 41 and to said generator 42, and which is further externally coupled via a connection 75 to receiving interface 51 and via a connection 76 to sending interface 58 and via a connection 77 to transceiver 61 and via said connections 73 and 74 to said coupler 33 in said first switch 3.

According to prior art, the system shown in figure 1 functions as follows. Message processing system 1, terminal 2 and switch 3 for example form part of a private network of a company, with coupler 33 of switch 3 being coupled to many more terminals not shown. A user working for this company and sitting behind terminal 2 has access to message processing system 1 via connections 70-72, and may pick up messages (email, fax, audio, voice/speech etc.) destined for this user and stored in memory 15 for reading them and/or manipulating / activating them via mmi 23 and may decide via mmi 23 to activate the message forwarder 17 to automatically forward messages destined for this user to for example message processing system 5, to which this user has access via terminal 6 for example located at his home, with message processing system 5 forming part of this user's private Internet provider. This allows a user to for example work at home.

In case such a user however decides to stay home unexpectedly, this user has two options. Either firstly this user must go to work for a few minutes to activate the message forwarder 17 from terminal 2, or secondly this user must for example call a colleague or send an email to this colleague and ask this colleague to activate said message forwarder, thereby being obliged to enter the user's identification and password. Both options are disadvantageous.

The system according to the invention as shown in figure 1 functions as follows, whereby a third option is offered to avoid both disadvantageous options.

According to a first embodiment, a user sitting behind terminal 6 for example at home decides to stay at home and not to go to work but to work at home. Therefore, said user dials a speech-connection-number of message processing system 1 via mmi 63, in response to which a speech connection is set up from transceiver 61 via connection 77 and coupler 43 and connection 74 and coupler 33 and connections 70,71 to message processing system 1. Then said user dials further numbers like for example an identification code and a pincode and a first and second address code (address signals), which (pulse signals or DTMF (audio) signals) in the form of signalling signals are supplied to message processing system 1. Via receiving interface 11 said identification code is for example supplied to arbiter 19 for checking this user's privileges. Said pincode is for example supplied to code detector 14 for checking this user's authorisation, and said first and second address code (address signals) are for example supplied to address receiver 13. Then under control of processor 10, after having checked said privileges and said authorisation, for example an info-message is sent to said user via said speech connection to inform said user that said forwarding has been activated, in response to which said user will finish said speech connection. Such an info-message can be in the form of signalling signals for example to be displayed on mmi 63. Then all new coming messages arriving at message processing system 1 and being destined for said user (defined by said first address code) are received via message receiver 12 and stored in memory 15, and copied, whereby in the copies said first address code is replaced by said second address code, after which via message forwarder 17 said copies comprising said second address code are forwarded via switch 3 and 4 to message processing system 5, in which said copies are stored. Said user then has the possibility via terminal 5 to get access to this message processing system 5 for collecting the forwarded messages now stored in memory 55.

According to a first alternative to said first embodiment, said user uses voice/speech signals for entering said codes, whereby either in terminal 6 or in switches 3 or 4 or in message processing system 1 (for example in receiving interface 11) said voice/speech signals are to be converted into data signals. And/or said message is in the form of voice/speech signals, whereby either in message processing system 1 (for example in sending interface 18) or in switch 3 or 4 or in terminal 6 (for example in transceiver 61 and/or in mmi 63) said voice/speech signals are to be converted into data signals (and for example to be displayed on mmi 63) or not at all (and for example to be acoustically generated via mmi 63).

According to a second alternative to said first embodiment, said user uses fax signals for entering said codes, whereby either in terminal 6 or in switches 3 or 4 or in message processing system 1 (for example in receiving interface 11) said fax signals are to be converted into data signals. And/or said message is in the form of fax signals, whereby either in message processing system 1 (for example in sending interface 18) or in switch 3 or 4 or in terminal 6 (for example in transceiver 61 and/or in mmi 63) said fax signals are to be converted into data signals (and for example to be displayed on mmi 63) or not at all (and for example to be displayed and/or generated in the form of a fax via mmi 63).

According to a third alternative to said first embodiment, all new coming messages arriving at message processing system 1 and being destined for said user (defined by said first address code) are received via message receiver 12 and stored in memory 15, whereby message detector 16 analyses each one of these messages, and for example detects a message urgency (low priority - average priority - high priority), a message confidentiality (normal, private, company confidential), a message acknowledgement (none, arrived, read), a source address (the sender's address), a message size, etc., and in response selects which messages are to be entirely forwarded (for example those messages having a low confidentiality and/or a high priority and/or a source address defining the same company), which messages are to be partly forwarded (for example without attachments due to a size being too large and/or just the title of those messages having an average confidentiality) and which messages are not to be forwarded at all (for example those messages having a high confidentiality and/or a low priority and/or a source address defining the competition). Then (partial) copies are made, and in these copies said first address code is replaced by said second address code, after which via message forwarder 17 said copies comprising said second address code are forwarded via switch 3 and 4 to message processing system 5, in which said copies are stored, etc. The rules according to which said message detector analyses may of course be adjusted by said user for example via further code signals.

According to a second embodiment, a user sitting behind terminal 6 for example at home decides to stay at home and not to go to work but to work at home. Therefore, said user dials a signalling-connection-number of message processing system 1 via mmi 63, in response to which a signalling connection is set up from transceiver 61 via connection 77 and coupler 43 and connection 74 and coupler 33 and connections 70,71 to message processing system 1. Then said user enters further numbers like for example an identification code and a pincode and a first and second address code (address signals), which (pulse signals or DTMF (audio) signals) in the form of signalling signals are supplied to message processing system 1. Via receiving interface 11 said identification code is for example supplied to arbiter 19 for checking this user's privileges. Said pincode is for example supplied to code detector 14 for checking this user's authorisation, and said first and second address code (address signals) are for example supplied to address receiver 13. Then under control of processor 10, after having checked said privileges and said authorisation, for example an info-message is sent to said user via said signalling connection to inform said user that said forwarding has been activated, in response to which said user will finish said signalling connection. Such an info-message can be in the form of signalling signals for example to be displayed on mmi 63. Then all new coming messages arriving at message processing system 1 and being destined for said user (defined by said first address code) are received via message receiver 12 and stored in memory 15, and copied, whereby in the copies said first address code is replaced by said second address code, after which via message forwarder 17 said copies comprising said second address code are forwarded via switch 3 and 4 to message processing system 5, in which said copies are stored. Said user then has the possibility via terminal 5 to get access to this message processing system 5 for collecting the forwarded messages now stored in memory 55.

According to a first alternative to said second embodiment, said user uses voice/speech signals for entering said codes, whereby either in terminal 6 or in switches 3,4 or in both (Distributed Speech Recognition or DSR) said voice/speech signals are to be converted into data signals. And/or said message is in the form of voice/speech signals, whereby either in message processing system 1 (for example in sending interface 18) or in switch 3,4 or in both (DSR) said voice/speech signals are to be converted into data signals (and for example to be displayed on mmi 63).

According to a second alternative to said second embodiment, said user uses fax signals for entering said codes, whereby for example in terminal 6 said fax signals are to be converted into data signals. And/or said message is in the form of fax signals, whereby for example in message processing system 1 (for example in sending interface 18) said fax signals are to be converted into data signals (and for example to be displayed on mmi 63).

According to a third alternative to said second embodiment, all new coming messages arriving at message processing system 1 and being destined for said user (defined by said first address code) are received via message receiver 12 and stored in memory 15, whereby message detector 16 analyses each one of these messages, etc.

According to a third embodiment, a user sitting behind terminal 6 for example at home decides to stay at home and not to go to work but to work at home. Therefore, said user now contacts message processing system 5, and creates an email, which comprises for example an identification code and a pincode and a first and second address code (address signals), which as a part of said email are supplied to message processing system 1. Via receiving interface 11 said email is supplied to message receiver 12, which informs processor 10. For example processor 10 detects that said email comprises a forwarding instruction (by detecting the source address in combination with the identification code and/or by detecting said first and second address code and/or by detecting information in the header of said email etc.), in response to which said identification code is for example supplied to arbiter 19 for checking this user's privileges. Said pincode is for example supplied to code detector 14 for checking this user's authorisation, and said first and second address code (address signals) are for example supplied to address receiver 13. Then under control of processor 10, after having checked said privileges and said authorisation, for example an email message is sent back to said user's message processing system 5 to inform said user that said forwarding has been activated.

Then all new coming messages arriving at message processing system 1 and being destined for said user (defined by said first address code) are received via message receiver 12 and stored in memory 15, and copied, whereby in the copies said first address code is replaced by said second address code, after which via message forwarder 17 said copies comprising said second address code are forwarded via switch 3 and 4 to message processing system 5, in which said copies are stored. Said user then has the possibility via terminal 5 to get access to this message processing system 5 for collecting the forwarded messages now stored in memory 55.

According to a first alternative to said third embodiment, said user uses voice/speech signals and/or audio signals for entering said codes, whereby in terminal 6 said voice/speech signals and/or audio signals are to be converted into data signals to be inserted into said email. And/or said message is in the form of voice/speech signals and/or audio signals, whereby in message processing system 1 (for example in sending interface 18) said voice/speech signals and/or audio signals are to be converted into data signals to be inserted into said email, etc.

According to a second alternative to said third embodiment, all new coming messages arriving at message processing system 1 and being destined for said user (defined by said first address code) are received via message receiver 12 and stored in memory 15, whereby message detector 16 analyses each one of these messages, etc.

According to a fourth embodiment, a user operates terminal 6 in response to which a speech connection and/or a signalling connection is set up, after which said user enters one or more codes, which are sent to message processing system 1, which in return sends back a status of for example already existing (activated) forwards etc. and/or sends back an overview of for example messages arrived and/or of for example possible forwards (to be activated) and/or of for example rules etc. and/or sends back a summary of for example messages arrived and/or of messages already forwarded etc. (which status, overview and/or summary are stored in memory 15 for example). Then either said connection is finished or said user enters further codes as described before.

According to a first alternative to said fourth embodiment, said user contacts message processing system 1 via terminal 6 through email, etc.

According to a fifth embodiment, message processing system 1 stores (for example in memory 15) information received in case of a certain second address code defining a destination which cannot be reached, and/or tries to reach said destination defined by said second address code after receival of this address code. For both cases, a user trying to forward towards this second address code is informed, for example via said info-message which can be sent to said user to inform that said forwarding has been activated but which now may comprise a warning etc.

One or more terminals may further be Internet terminals like for example screenphones or pc's, or are for example mobile phones which for example are being provided with WAP, etc.

One or more connections may be wired connections, wireless connections, mobile connections (comprising base stations not shown), and/or circuit switched connections, packet switched connections, Internet connections, always-on IP-connections etc. Further connections not shown may be present, for example between both message processing systems for exchanging messages which thereby are converted from one type into another or not etc.

Said message processing systems may each be present several times in parallel or may be capable of dealing with several terminals and/or other message processing systems and/or switches in parallel.

Inside said terminals, either said transceiver or said generator is an address sender. Said generator could further be used for automatically generating at least one of said codes, for example in response to said user having activated specific software. In case of said terminal being provided with a smart card reader, finger print detector, voice/speech recognizer etc. said generator will generate said identification codes and/or said pincodes automatically for example and/or convert smart card info and/or finger print info and/or voice/speech recognizer info into said codes etc.

Said arbiters in said message processing systems can be in the form of a comparator for comparing first codes received from (a processor and/or a memory of) his own message processing system with second codes received from said terminals, or may be in a more complex form, like a Programmable Logic Array, or may even comprise its own processor (and possibly its own memory) for running software for performing said arbitration.

All embodiments are just embodiments and do not exclude other embodiments not shown and/or described. All alternatives are just alternatives and do not exclude other alternatives not shown and/or described. Any (part of an) embodiment and/or any (part of an) alternative can be combined with any other (part of an) embodiment and/or any other (part of an) alternative.

Said terminals, message processing systems and switches can be in accordance with GSM, UMTS, DECT, ISDN, PSTN etc. Said construction of said terminals, message processing systems and switches can be amended without departing from the scope of this invention. Parallel blocks can be connected serially, and vice versa, and each bus can be replaced by separate connections, and vice versa. Said units and circuits, as well as all other blocks shown and/or not shown, can be 100% hardware, or 100% software, of a mixture of both. Each unit, circuit and block can be integrated with a processor or any other part, and each function of a processor can be realised by a separate unit, circuit or block.

## Claims

1. Message processing system comprising a message receiver for receiving a message sent to a first destination defined by a first address signal and comprising a message forwarder for automatically forwarding said message to a second destination defined by a second address signal, characterised in that the message processing system comprises an address receiver for receiving said second address signal originating from a terminal at a third destination defined by a third address signal, which third address signal is different from said first address signal.

2. Message processing system according to claim 1, characterised in that the message processing system comprises a message detector for a message detection of at least a part of said message, which message detector is coupled to said message forwarder for automatically forwarding said message in dependence of said message detection.

3. Message processing system according to claim 1 or 2, characterised in that the message processing system comprises a code detector for a code detection of a code signal originating from said terminal, which code detector is coupled to said message forwarder for automatically forwarding said message in dependence of said code detection.

4. Message processing system according to claim 1, 2 or 3, characterised in that the message processing system comprises an arbiter coupled to said message forwarder for automatically forwarding said message in dependence of an arbitration.

5. Message processing system according to claim 1, 2, 3 or 4, characterised in that the message processing system comprises a memory for storing messages.

6. Message processing system according to claim 5, characterised in that said memory is coupled to said message forwarder for automatically forwarding said messages already stored.

7. Message processing system according to claim 1, 2, 3, 4, 5 or 6, characterised in that said message comprises an email signal, a voice/speech signal, an audio signal and/or a fax signal.

8. Message processing system according to claim 7, characterised in that said second address signal is sent from said terminal to said address receiver via an email signal, a voice/speech signal, an audio signal and/or a fax signal.

9. Terminal for use in combination with a message processing system comprising a message receiver for receiving a message sent to a first destination defined by a first address signal and comprising a message forwarder for automatically forwarding said message to a second destination defined by a second address signal, characterised in that the terminal at a third destination defined by a third address signal comprises an address sender for sending said second address signal to an address receiver in said message processing system, which third address signal is different from said first address signal.

10. Method for use in a message processing system and comprising the steps of receiving a message sent to a first destination defined by a first address signal and of automatically forwarding said message to a second destination defined by a second address signal, characterised in that the method comprises the step of receiving said second address signal originating from a terminal at a third destination defined by a third address signal, which third address signal is different from said first address signal.
